# EUROPEAN PATENT APPLICATION

(11) **EP 0 953 838 A1**
(43) Date of publication of application: **03.11.1999**
(21) Application number: 98810396.6
(22) Date of filing: 01.05.1998
(51) Int. Cl.: G01N 21/64, G01N 21/25

(54) **Apparatus for simultaneously monitoring reactions taking place in a plurality of reaction vessels**

(71) Applicant: F. HOFFMANN-LA ROCHE AG, 4070 Basel (CH)
(72) Inventor: Schmid, Karl, 8808 Pfäffikon (CH); Petermann, Daniel, 6044 Udlingenswil (CH)
(74) Representative: AMMANN PATENTANWAELTE AG BERN

(57) **Abstract**

The apparatus (10) comprises four square vessel holders (11.1 to 11.4) each of the holders taking up to twenty-four removable reaction-vessels 18. The different holders allow independent temperature cycles for the different groups of vessels (18). A single light source (13) produces the excitation light needed. A network of two different kinds of optic fiber bundles (41, 45) transmits this light to the reaction vessels through a first set of interference filters (21.1 to 21.4), second optical units paralleling and focusing the light, respectively. A test branch 41.6 of the first bundle (41) is connected to a reference unit (43) for control purposes. Fluorescence light emitted by sample-reaction-mixtures is collected by third optic fibers (47) and is transmitted through a second set of interference filters (23.1 to 23.4) to individually assigned light receiving elements (51). The filters are carried by wheels (22, 24) which are rotated stepwise and in synchronism with each other. This allows to change periodically the wavelength of excitation light and the kind of monitoring. The apparatus makes possible free handling of the vessel holders (11.1 to 11.4) and random access to vessels to be monitored.

## Description

The invention concerns a fluorescence measuring apparatus for simultaneously monitoring reactions taking place in a plurality of removable reaction vessels containing sample-reagent-mixtures apt to emit fluorescent light when illuminated by an excitation light.

The apparatus also concerns a method of using such an apparatus.

An apparatus for the automatic execution of temperature cycles is known from EP 0 642 831 A1. This apparatus comprises two independent circular vessel holders for each twelve reaction vessels, each of these vessels containing sample-reagent liquid mixtures of about 100 µl. These vessel holders are metallic and allow fast temperature cycling of sample-reagent liquid mixtures contained in said vessels by means of controlled Peltier elements. The holders may be used at different times and the cycles may be different, too.

A system for real time detection of nucleic acid amplification products is known from WO 95/30139 A1. This system allows to carry out fluorescence-based measurements on a plurality of sample-reagent Liquid mixtures within small vessels at different, varying temperatures. The excitation light arrives the vessels from the top side via a fiber optic and a focal lens. The fluorescent light is collected via the same way in opposite direction and is transmitted to a centralized optical separation and analyses component. This component allows spectral analysis of the fluorescence light received.

The above mentioned devices do not provide all performance features expected from analyzer systems needed today. Such systems are expected to offer a wide choice of possible optical configurations in order to enable the user to perform a large variety of possible tests. If this need is satisfied by multiplying the number of components in function of the number of reactions to be monitored, the result is a considerable increase of material required with a corresponding increase of costs.

The aim of the invention is therefore to provide an apparatus of the above-mentioned type which offers a wide choice of possible optical measurement configurations and measurements with a minimum of components in order to limit costs.

According to the invention this aim is attained with an apparatus which comprises
(a) a plurality of groups of reaction vessels, each group being positioned in a corresponding vessel holder; each vessel holder allowing independent thermal cycling of the group of vessels it holds
(b) a single light source,
(c) a set of optical filters each of which is apt to be selectively positioned in the optical path linking the single light source to one of the groups of reaction vessels, and
(d) a network of optical fibers for optically connecting said light source said optical filters, said plurality of groups of reaction vessels and a plurality of fluorescence light receiving means.

A main advantage of the apparatus according to the invention is that it comprises a compact array for a large number of reaction vessels, which is suitable for performing different thermal cycling modes and excitation by light of different wave-lengths. The apparatus according to the invention is therefore in particular suitable for monitoring simultaneously reactions taking place in a large plurality of reaction vessels arranged in groups by means of fluorescence measurements. The monitoring can be carried out at any time and during different thermal cycling modes. The wavelength of the light used for excitation of the sample-reagent mixtures can be changed and can have e.g. four different values.

Preferred embodiments of the invention are characterized by the features defined by claims 2 to 12.

For a better understanding of the invention, preferred embodiments thereof are described in more detail hereinafter with reference to the accompanying drawings.
Figure 1 shows a general block diagram of an apparatus for monitoring reactions.
Figure 2 shows a timetable for a typical random access timing.

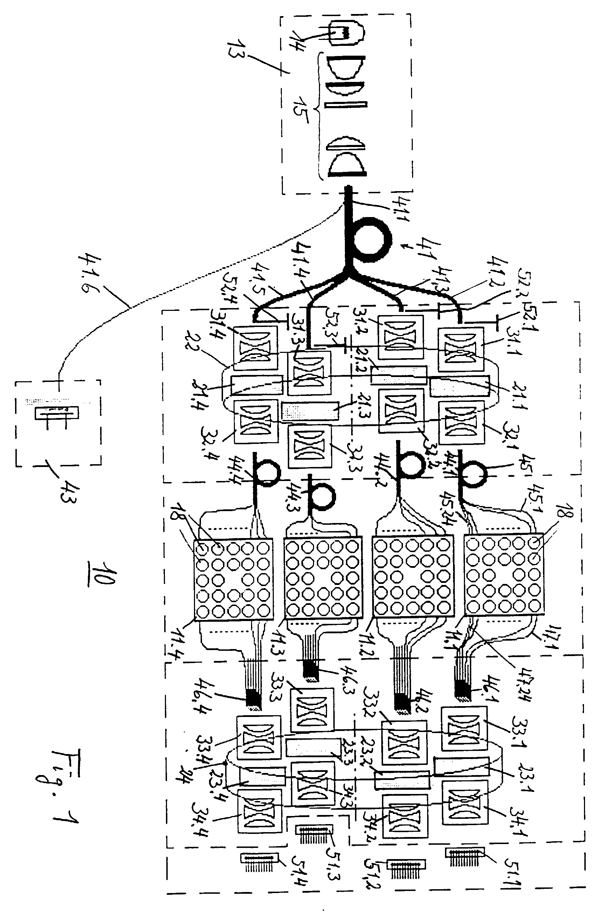

Figure 1 shows a block diagram of an apparatus 10 for monitoring reactions, which take place in a first plurality m of reaction vessels 18. These are removable vessels 18 the lower parts of which are positioned in respective chambers of e. g. four square vessel holders 11.1 to 11.4. Each of these vessel holders comprises a matrix like array of twenty-four chambers, each of these chambers being apt to receive the lower part of one of said vessels 18 which stands in upright position in that chamber. The vessel holders 11 have flat ground plates arranged in horizontal position. Each of this ground plates is preferably mechanically and thermally connected with a Peltier element which is used to carry out thermal cycles on the reaction vessels. The first plurality m of reaction vessels is consequently 96 as the product of a second plurality n being 24 (24 chambers per vessel holders) and of a third plurality p being 4 (4 vessel holders), but this is of course just an example and other suitable numbers can be chosen for each of the pluralities just mentioned.

The apparatus 10 further comprises a light source 13, a network of different optic fibers, two sets of movable optical filters, a set of shutters, which in the following will be described in detail, and a set of multiple light receiving elements.

The single, common light source 13 comprises a controlled electric halogen lamp 14 and optical means 15 comprising a set of lenses in order to form a light beam from the light emitted by the halogen lamp.

The first set of optical filters comprises a fourth plurality q (e.g. four) of different interference filters 21.1 to 21.4, carried by a motor driven, rotatable wheel 22. The relative position of these filters with respect to the vessel holders is changeable and this makes possible allows to illuminate the sample-reagent mixtures contained in the reaction vessels with excitation light of different wavelengths and narrow bandwidth.

Interference filters 21.1 to 21.4 are so arranged that they are apt to selectively cooperate with two optical units 31.1 to 31.4 and 32.1 to 32.4. Optical units 31.1 to 31.4 are needed for paralleling the light beams escaping from optic fibers 31.1 to 31.4 described below. At the opposite side of filters 21.1 to 21.4 second optical units 32.1 to 32.4 focus the light beams traversing the filters into further optic fibers 32.1 to 32.4 described below.

The second set of optical filters has a structure similar to the one of the above mentioned first set of optical filters and comprises a fourth plurality q (e.g. four) of different second interference filters (23.1 to 23.4, carried by a second, motor driven, rotatable wheel 24. Interference filters 23.1 to 23.4 are so arranged that they are apt to selectively cooperate with two optical units 33.1 to 33.4 and 34.1 to 34.4 which serve for paralleling and for focusing light beams respectively.

The first 21.1 to 21.4 and the second interference filters 23.1 to 23.4 are tuned by pairs with each other to allow transmission of specific pairs of excitation wavelengths and resulting fluorescence wavelengths.

The network of optic fibers comprises three different kinds of optic fiber bundles. A first optic fiber bundle 41 is connected to the light source 13. Bundle 41 is composed of a thick main branch 41.1, which separates into four thinner adjoining branches 41.2 to 41.5, and a small test branch 41.6. The bundled end piece of bundle 41 takes up the light provided by the light source 13. This light is divided into five parts which are guided to the separated ends of the adjoining branches 41.2 to 41.5 and also to the separated end of test branch 41.6. The separated ends of branches 41.2 to 41.5 are close to said first optical units 31.1 to 31.4, respectively, the separated end of branch 41.6 is connected to a reference unit 43.

Four second identical optic fiber bundles 44.1 to 44.4 are arranged between the second optical units 32.1 to 32.4 and the reaction vessels 18 positioned on vessel holders 11.1 to 11.4 as shown by Fig. 1. Each of bundles 44.1 to 44.4 is composed of a relatively thick main branch 45 which splits up into twenty-four single, second, optic fibers 45.1 to 45.24. The main branches 45 take up the excitation light passing through filters 21.1 to 21.4, and the optic fibers 45.1 to 45.24 transmit excitation light to the reaction liquids contained in the reaction vessels 18.

The third optic fiber bundles 46.1 to 46.4 are each formed of twenty-four third optic fibers 47.1 to 47.24. These third optic fibers are connected at one end individually to said reaction vessels 18 respectively to the chambers bearing these vessels, and at the opposite end the third fibers 47.1 to 47.24 are connected to the third optical units 31.1 to 31.4, respectively.

The shutters 52.1 to 52.4 are arranged between said adjoining branches 41.2 to 41.5 of the first bundle 41 and said first optical units 31.1 to 31.4., or between said of second optical units 32.1 to 32.4 and said main branches 45 of said second bundles 44.1 to 44.4.

The shutters are controllable individually and allow to interrupt the light paths between the light source 13 and the reaction vessels 18.

In a preferred embodiment the light receiving elements 51.1 to 51.4 are compact units of light receiving components and each of these units comprises, e.g. twenty-four light receiving elements so that each of these elements is assigned to one reaction vessel 18.

The apparatus 10 operates as follows. A plurality of reaction vessels 18 are filled with liquid sample-reagent-mixtures, and positioned on vessel holders 11.1 to 11.4. The excitation light produced by the light source 13 is transmitted by the first bundle 41 to the first optical units 31.1 to 31.4 and to the reference unit 43. This unit 43 controls the luminous intensity of the lamp 14.

The light escaping from the adjoining optic fiber branches 41.2 to 41.5 reaches the first optical units 31.1 to 31.4, which transmit light as beams of parallel light to the first interference filters 21.1 to 21.4 , which in turn transmit light to the second optical units 32.1 to 32.4, these transmit light to the second optic fiber bundles 44.1 to 44.4, and light eventually reaches the reaction vessels 18 as excitation light of four different kinds. These kinds differ by the wavelengths filtered out by filters 21.1 to 21.4 which filter different wavelength bands.

The fluorescence light emitted by the excitated sample-reagent mixtures is collected individually by the third plurality of optic fibers 47.1 to 47.24 of the third optic fiber bundles 46.1 to 46.4. This fluorescence light is transmitted to the third optical units 33.1 to 33.4, through this units to the second interference filters 23.1 to 23.4 as beams of parallel light, is further transmitted to the fourth optical units 34.1 to 34.4, and reaches as focused beams individually assigned light receiving elements 51.1 to 51.4, these elements convert the fluorescence light beams into individual electric monitoring signals corresponding to the reaction vessels 18. The monitoring signals of all vessels 18 are obtained in parallel, i.e. simultaneously.

The shutters 52.1 to 52.4 may be used to interrupt the excitation light as a whole or for one or the other of the light paths through said second bundles 44.1 to 44.4. By turning the wheels 22 and 24 all the first and second interference filters 21.1 to 21.4, 23.1 to 23.4, respectively, will be changed synchronically and periodically. The wheels 22, 24 are rotatable separately, but in practice they are turned in synchronism.

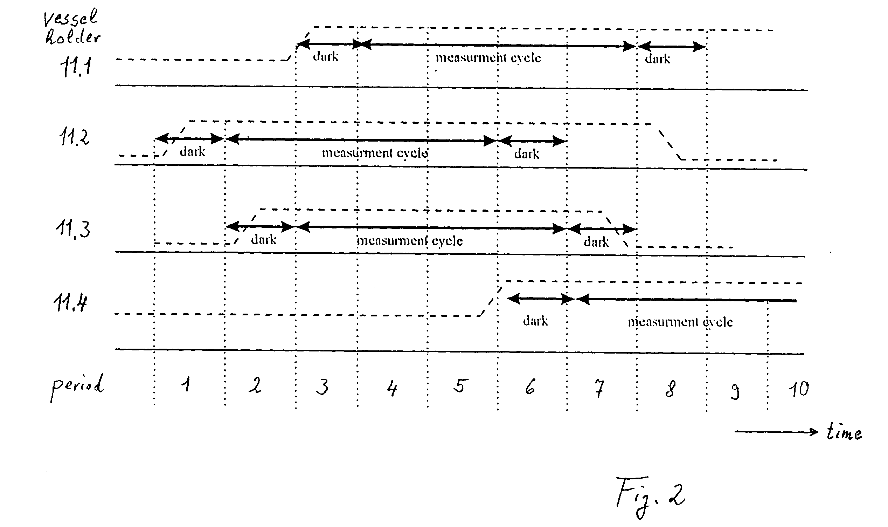

Figure 2 shows a timetable for a typical process for using the first and second optical filters 21.1 to 21.4 and 23.1 to 23.4 in synchronism and for using the shutters 52.1 to 52.4. The time is running from left to right, divided in equal periods given by the stepwise rotation of the wheels 22, 24 bringing the interference filters 21.1 to 21.4 and 23.1 to 23.4 periodically into other positions. At the beginning the excitation light is interrupted for all vessel holders 11.1 to 11.4. At period 1 vessel holder 11.2 is ready for excitation, the excitation beginning at period 2 with excitation light passing filter 21.2, at period 3 the light passing filter 21.3, at period 4 the light passing filter 21.4, at period 5 the light passing filter 21.1, and at period 6 the excitation cycle being terminated for vessel holder 11.2. Independent excitation cycles beginning for vessel holder 11.3 at period 2, for vessel holder 11.1 at period 3 and for vessel holder 11.4 at period 6.

The independence of the different cycles of excitation for the different vessel holders 11.1 to 11.4 gives full freedom for managing different groups of reaction vessels 18 referring to time of preparation, to method of handling, especially to temperature profile used, etc.

Said freedom is very important for the daily practical use of apparatus 10. Thus the apparatus 10 allows at any time to excitate the sample-reagent mixtures reacting within the reaction vessels 18 stepwise with light of a desired quality and quantity. The resulting fluorescence light emitted is collected by the third optic fibers 47.1 to 47.24 and transmitted to the light receiving elements 51.1 to 51.4, which receivers emit associated monitoring signals.

It is important, that the excitating light at any time is interruptable without switching off the light source 13 by said shutters 52.1 to 52.4. This allows e. g. short excitation periods between long dark periods.

There are a lot of variants within the general idea of the invention. The most important variants will be nominated in the following:
- There may be more or less than four vessel holders 11.1 to 11.4 and more or less than twenty-four reaction vessels 18 per holder 11.
- The kind of the first and second optical filters 21.1 to 21.4; 23.1 to 23.4 is free. Preferred four different interference filters are used, but one of the filters may be totally transparent, two of the filters may be equal, or a plurality q other than four is provided, e.g. five filters per wheel 22, 24.
- The light beams traversing the filters 21.1 to 21.4; 23.1 to 23.4 may be more or less broad. Said optical units 31, 32, 33, 34 may be equal or different in their construction.
- The filter wheels 22, 24 may be flat disks as shown. In an other embodiment the wheels may be e.g. cylindrical units bearing the filters 21, 23 in windows of the cylinder case, etc.
- The second filters 23.1 to 23.4 may be deleted to get the full fluorescence spectrum for monitoring.
- Additional shutters can be arranged between optic fiber branches 46.1 to 46.4 and optical units (33.1 to 33.4) in order to protect light receivers, like e.g. photomultiplier tubes, from unnecessary and destructive illumination.

## Claims

1. A fluorescence measuring apparatus (10) for simultaneously monitoring reactions taking place in a plurality of removable reaction vessels containing sample-reagent-mixtures apt to emit fluorescent light when illuminated by an excitation light, said apparatus comprising:
(a) a plurality of groups of reaction vessels, each group being positioned in a corresponding vessel holder (11.1 to 11.4); each vessel holder allowing independent thermal cycling of the group of vessels it holds
(b) a single light source (13),
(c) a first movable set of optical filters (21.1 to 21.4) each of which is apt to be selectively positioned in the optical path linking the single light source (13) to one of the groups of reaction vessels, and
(d) a network of optic fibers for optically connecting said light source (13), said optical filters (21.1 to 21.4), said plurality of groups of reaction vessels (18) and a plurality of fluorescence light receiving means (51.1 to 51.4)

2. An apparatus according to claim 1, wherein said light source (13) comprises a controlled halogen lamp (14) and optical means (15) optically connected thereto for forming an excitation light beam.

3. An apparatus according to claim 1, wherein said network of optic fibers comprises
- a first bundle (41) of optic fibers dividing from a single main branch (41.1) which is optically connected to said light source (13) into a third plurality (p) of equal adjoining branches (41.2 to 41.5) connected to said set of optical filters (21.1 to 21.4), and dividing into an additional branch (41.6) connected to a reference unit (43),
- a plurality (p) of second bundles (44.1 to 44.4) of optic fibers each of which divides from a single branch (45) connected to one of said optical filters (21.1 to 21.4) into a second plurality (n) of equal second fibers (45.1 to 45.24), each of which is connected to one of said reaction vessels (18) positioned on one of said vessel holders (11.1 to 11.4), and
- a plurality (p) of third bundles (46.1 to 46.4) of optic fibers each of which bundles is formed by a second plurality (n) of third optic fibers (47.1 to 47.24) connecting said reaction vessels (18) of each of said vessel groups positioned on one of said vessel holders (11.1 to 11.4) with an individually assigned fluorescence light receiving element (51.1 to 51.4).

4. An apparatus according to claims 1 and 3, wherein said set of optical filters (21.1 to 21.4) comprises
- a rotatable wheel (22) for carrying said a plurality (q) of optical filters (21.1 to 21.4),
- a plurality (p) of first optical units (31.1 to 31.4) for paralleling the light beams escaping said adjoining branches (41.2 to 41.5) of said first bundle (41) and transmitting said optical filters (21.1 to 21.4), and
- a plurality of second optical units (32.1 to 32.4) for focusing said light beams transmitting said optical filters (21.1 to 21.4) into said main branches (45) of said second bundles (44.1 to 44.4).

5. An apparatus according to claims 1 and 4, wherein
a plurality (p) of controlled shutters (52.1 to 52.4) is provided between said adjoining branches (41.2 to 41.5) of said first bundle (41) and said plurality of first optical units (31.1 to 31.4), or between said plurality of second optical units (32.1 to 32.4) and said main branches (45) of said second bundles (44.1 to 44.4), to interrupt individually said excitation light.

6. An apparatus according to claims 1 to 5, wherein a second set of movable optical filters (23.1 to 23.4) is provided between said third bundles (46.1 to 46.4) and said fluorescence light receiving elements (51.1 to 51.4), and a second rotatable wheel (24) carries said second set of optical filters (23.1 to 23.4).

7. An apparatus according to claims 1 and 6, wherein said first set of movable filters (21.1 to 21.4) and said second set of movable filters (23.1 to 23.4) are interference filters, one filter of the first set and one filter of the second set being tuned by pairs with each other.

8. An apparatus according to claims 1 and 6, wherein
rotation of said first wheel (22) and rotation of said second wheel (24) are controlled individually and/or are synchronized with each other.

9. An apparatus according to claim 1, wherein said vessel holders (11.1 to 11.4) are arranged in a same plane.

10. An apparatus according to claims 1 to 9, wherein
the plurality of reaction vessels which can be monitored in the apparatus comprises 96 vessels, the plurality of vessels of a group of vessels comprises 24 vessels, the plurality of vessel holders comprises 4 vessel holders and the plurality of different excitation wavelengths comprises 4 wavelengths.

11. Method for using apparatus 10 according to any of claims 1 to 10, wherein
said different vessel holders (11.1 to 11.4) are used to take up different groups of said reaction vessels (18), and each said groups being excitable by said excitation light at any time independent of the other said groups.

12. Method according to claim 11, wherein
the wave-length of the excitation light applied to a group of reaction vessels is changed periodically by changing the relative position of said set of filters (21.1 to 21.4), said change of relative position being obtained by stepwise rotation of said wheel (22) carrying said filters.
